# FASCICULE DE BREVET EUROPEEN

(11) **EP 2 359 378 B1**
(45) Date de publication et mention de la délivrance du brevet: **19.11.2014**
(21) Numéro de dépôt: 09784351.0
(22) Date de dépôt: 30.11.2009
(51) Int. Cl.: H01H 33/66

(54) **CELLULE DE DISTRIBUTION ELECTRIQUE MOYENNE TENSION**
ELEKTRISCHE MITTELSPANNUNGS-VERTEILERZELLE
MEDIUM VOLTAGE ELECTRIC DISTRIBUTION CELL

(30) Priorité: 18.12.2008 FR 0807108
(43) Date de publication de la demande: 24.08.2011
(73) Titulaire: Schneider Electric Industries SAS, 92500 Rueil-Malmaison (FR)
(72) Inventeur: ROMANET-PERROUX, Philippe, F-38330 Biviets (FR); CABARET, Bertrand, F-38000 Grenoble (FR); HENON, Albin, F-38640 Claix (FR); NEREAU, Jean Pierre, F-38170 Seyssinet (FR)
(74) Mandataire: Colette, Marie-Françoise
(86) Numéro de dépôt international: PCT/FR2009/001355
(87) Numéro de publication internationale: WO 2010/076401

(56) Documents cités:
- EP-A- 1 302 959
- DE-A1- 3 528 770
- DE-B3-102005 013 231

## Description

La présente invention concerne une cellule de distribution électrique moyenne tension destinée à être interposée entre deux parties d'un circuit électrique de manière à assurer au moins les fonctions respectivement de passage du courant entre les parties, d'interruption du courant entre les parties, de sectionnement du circuit, et de mise à la terre de l'une des parties précitées.
Dans les cellules de distribution électriques connues, les ampoules à vide sont utilisées pour réaliser les fonctions interrupteur et disjoncteur tandis que les dispositifs à isolation dans l'air ou dans le gaz sont utilisés pour réaliser les fonctions de sectionnement ou de mise à la terre.
Ces fonctions peuvent être combinées de différentes manières afin de réaliser des unités fonctionnelles assurant à la fois les fonctions de passage du courant, d'interruption du courant, de sectionnement et de mise à la terre.
Ainsi, on connaît une unité fonctionnelle constituée d'un appareil de coupure à trois positions, réalisant respectivement les fonctions interrupteur, sectionneur et sectionneur de terre ou bien une unité fonctionnelle constituée d'un interrupteur-sectionneur combiné à un sectionneur de terre, ou bien une unité fonctionnelle constituée par un sectionneur deux positions comprenant la mise à la terre combinée à un interrupteur ou un disjoncteur. Et l'on connaît également par exemple, une unité fonctionnelle constitué par la combinaison de trois dispositifs réalisant respectivement les fonctions de sectionneur, sectionneur de terre et interrupteur.

On connaît également les documents DE 10 2005 013231, EP 1 302 959 et DE 35 28 770 décrivant des dispositifs comportant les caractéristiques du préambule de la revendication 1, ces dispositifs comportant l'association en série d'une ampoule à vide et d'un sectionneur de mise à la terre, ces deux appareils fonctionnant conjointement.

La présente invention propose une cellule de distribution électrique moyenne tension permettant de réaliser les fonctions respectivement de passage du courant, de coupure du courant, de sectionnement, et de mise à la terre, ladite cellule étant de conception simple, tout en réalisant un sectionnement offrant une sécurité accrue lors d'une intervention sur le réseau.
L'invention permet également d'obtenir une optimisation du dimensionnement des composants en tension.

A cet effet, la présente invention a pour objet une cellule de distribution électrique moyenne tension selon la revendication 1.
Ceci permet donc d'introduire des notions particulières de sectionnement, à savoir d'une part, un sectionnement d'exploitation du réseau, et d'autre part, un sectionnement permettant l'intervention des opérateurs sur l'appareillage ou son environnement, qui implique une forte notion de sécurité des opérateurs, garantie par le double sectionnement qui ajoute un espace supplémentaire.

Selon une caractéristique particulière, ladite cellule comporte des moyens pour empêcher le sélecteur de quitter la position fermée si l'interrupteur (disjoncteur) est en position fermée.

Selon une autre caractéristique, ladite cellule comporte des moyens pour empêcher la fermeture de l'interrupteur (disjoncteur) si le sélecteur est à la terre.

Selon une autre caractéristique, le sélecteur précité est un sélecteur à trois positions, respectivement une position de passage du courant, une position ouverte, et une position de mise à la terre de l'une des parties du circuit.

Selon une autre caractéristique, le sélecteur précité est un sélecteur à technologie de coupure dans un gaz.

Selon une autre caractéristique, l'interrupteur (disjoncteur) précité et/ou le sélecteur, est réalisé au moyen d'une ampoule à vide.

Selon une autre caractéristique, le sélecteur précité comporte une position, dite position de test câble, permettant le test des câbles.

Selon une autre caractéristique, la position de test câble correspond à la position ouverte précitée du sélecteur.

Selon une autre caractéristique, le sélecteur précité comporte pour la réalisation du test câble, une traversée ou partie fixe de la prise de test connectée du côté des câbles, ou bien une traversée ou partie fixe de la prise de test connectée du côté d'un contact fixe du sélecteur situé du côté du jeu de barres.

Mais d'autres avantages et caractéristiques de l'invention apparaîtront mieux dans la description détaillée qui suit et se réfère aux dessins annexés donnés uniquement à titre d'exemple et dans lesquels :
- Les figures 1 à 7 sont des représentations schématiques d'une cellule de distribution selon l'invention dans différentes positions,
- La figure 1 représente la cellule en position fermée,
- La figure 2 représente la cellule en position dite de sectionnement par l'ampoule,
- La figure 3 représente la même cellule en position de mise à la terre,
- La figure 4 représente la même cellule en position de sectionnement avec isolation supplémentaire, en aval de l'ampoule côté cable,
- Les figures 5,6,7 représentent la même cellule, dans une position dite de test des câbles, suivant trois réalisations possibles de ce test, et
- La figure 8 est une représentation schématique illustrant le raccordement de deux cellules, lors de la réalisation du test câble,

Sur les figures, on a représenté une cellule de distribution électrique moyenne tension selon l'invention, destinée à relier électriquement un jeu de barres j à un câble c. Cette cellule est destinée à assurer plusieurs fonctions, lesquelles sont respectivement, de permettre le passage du courant entre le jeu de barres j et le câble c, de réaliser l'interruption du courant suite à une coupure réalisée par un interrupteur (disjoncteur) suite à la survenue d'un défaut électrique, de réaliser un sectionnement du circuit permettant une exploitation indépendante des deux parties du réseau et de réaliser un sectionnement du circuit permettant une intervention sur le réseau, telle la réalisation d'un test câbles.
Cette cellule comporte entre le jeu de barres j et le câble c un interrupteur (disjoncteur) à vide 1 relié en amont au jeu de barres j et en aval à un sélecteur à air 2 à trois positions relié en aval au câble c.
Cet interrupteur (disjoncteur) à vide 1 est réalisé au moyen d'une ampoule à vide 3 et réalise également la fonction de sectionnement. Le sélecteur 2 est un sélecteur à technologie de coupure dans l'air à trois positions, respectivement une position de service autorisant le passage du courant, une position d'ouverture, et une position de mise à la terre.
La cellule comporte également des moyens pour empêcher le sélecteur de quitter la position fermée si l'interrupteur (disjoncteur) est en position fermée. Ces moyens sont nécessaires dans le cas où le sélecteur n'a pas de pouvoir de coupure.

Cette cellule comporte également des moyens pour empêcher la fermeture de l'interrupteur (disjoncteur) si le sélecteur est à la terre. Ces moyens sont nécessaires dans le cas où le sélecteur n'a pas de pouvoir de fermeture.

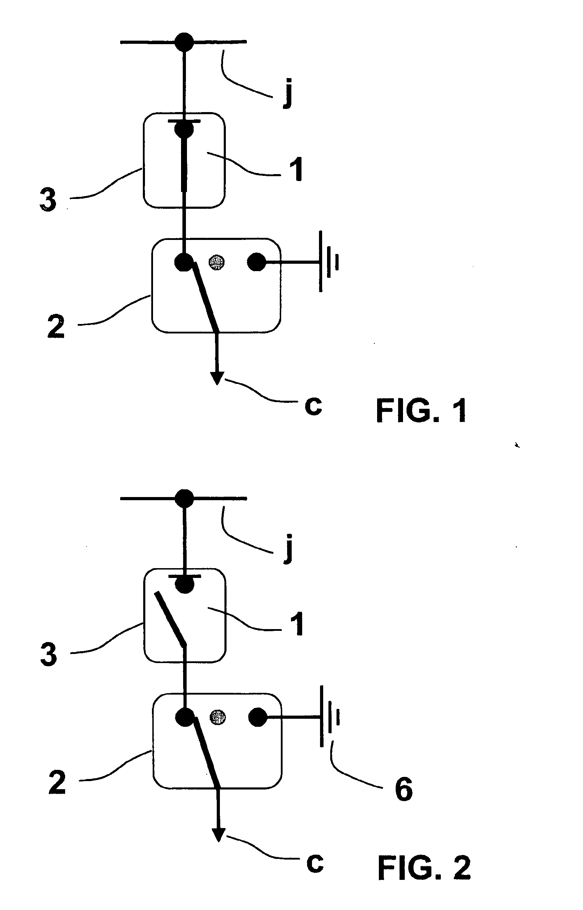

Sur la figure 1, le courant passe entre le jeu de barres j et le câble c, et la cellule est en position de service.
Sur la figure 2, la cellule est en position déconnectée dans laquelle l'interrupteur (disjoncteur) à vide est en position de sectionnement alors que le sélecteur est en position de passage du courant. Cette position permet une exploitation indépendante des deux parties j et c du réseau.

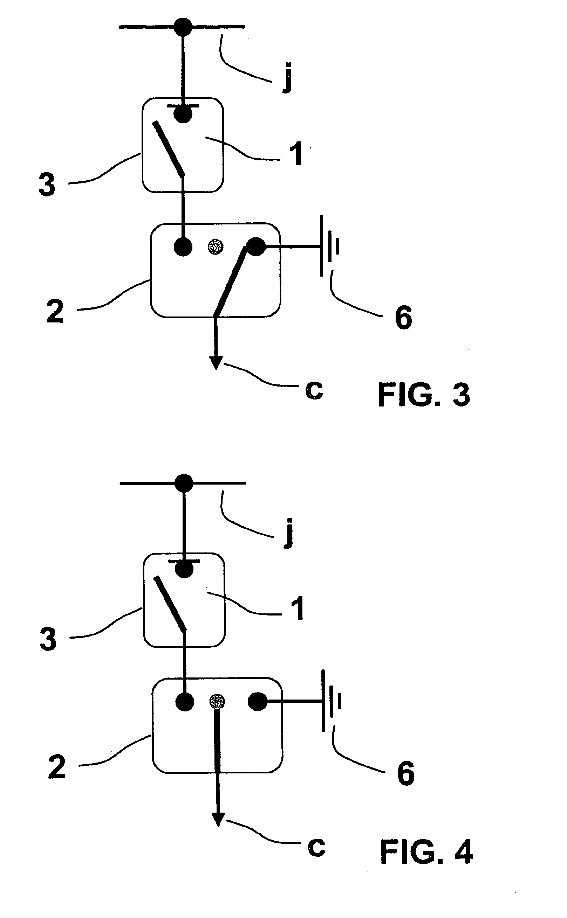

Sur la figure 3, la cellule est en position de mise à la terre 6.

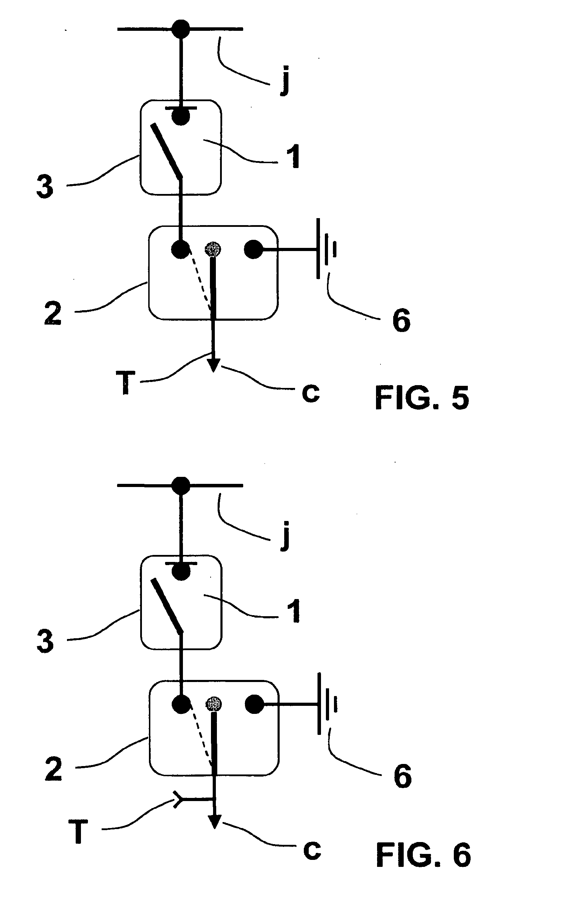

Dans cette position, l'interrupteur (disjoncteur) à vide 1 est en position sectionnée et le sélecteur à air 2 en position de mise à la terre. L'ouverture réalisée par le sélecteur à air ajoute un intervalle d'isolation lors de la mise à la terre, renforçant la sécurité obtenue dans cette position de la cellule et autorise une intervention sur le réseau en aval du sélecteur à air.
Sur la figure 4, la cellule est en position de sectionnement avec isolation supplémentaire dans laquelle l'interrupteur (disjoncteur) à vide et le sélecteur sont tous les deux dans une position de sectionnement.
Cette position de la cellule autorise également une intervention sur le réseau en aval du sélecteur dans des conditions de sécurité accrues, telle une intervention consistant à réaliser un test de câble, tel qu'illustré sur les figures 5 à 7, lequel test consiste à injecter une haute tension sur celui-ci afin de contrôler son comportement.
Sur la figure 5, dans cette position de sectionnement, un test de câble T est réalisé directement au niveau de la tête de câble sans utiliser de traversée dédiée.
Sur la figure 6, selon une autre réalisation, ce test T est réalisé par l'intermédiaire d'une traversée dédiée au test, aménagée du côté de la traversée de raccordement du câble, connectée du côté du câble lequel est en permanence sous tension.

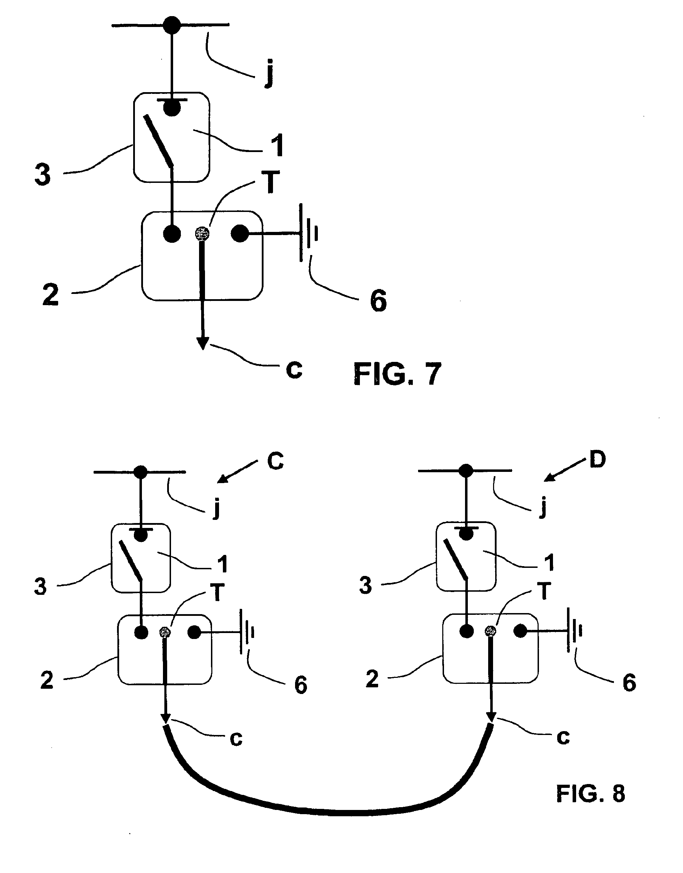

Sur la figure 7, ce test T est réalisé par l'intermédiaire de prises connectées au sélecteur du côté du contact fixe du sélecteur ayant dans ce cas trois positions.
Sur la figure 8, deux cellules de distribution C,D selon l'invention sont reliées électriquement par l'intermédiaire d'un câble reliant les bornes de sorties de leur sélecteur. Ceci permet de tester les câbles, soit par les têtes de câbles, soit par la déconnexion du point de connexion à la terre, soit par des traversées dédiées sur le point test ou du côté des câbles.
Ainsi, grâce à cette troisième position du sélecteur qui permet notamment de réaliser ce test sur les câbles, il n'est plus utile de prévoir un dimensionnement diélectrique des sorties normalement connectées à la terre, comme ceci aurait été le cas si la réalisation du test des câbles était réalisée par une déconnection du point de connexion à la terre.
On a donc réalisé selon l'invention, une cellule de distribution améliorant les conditions de sécurité lors d'une intervention en aval du sélecteur et ce, que le sélecteur soit à deux ou trois positions.

L'invention se caractérise donc par la mise en série de deux organes de sectionnement et isolation ayant fonction de sectionneur :
- un interrupteur-sectionneur ou disjoncteur-sectionneur à technologie de coupure dans le vide dont la simple ouverture permet d'assurer la fonction de sectionnement nécessaire à l'exploitation du réseau (séparation effective de deux partie du réseau en respectant les exigences spécifiées pour les sectionneurs), et
- un combiné sélecteur-sectionneur de terre qui apporte un intervalle d'isolation fiable (et éventuellement visible) lorsque le départ câble est mis à la terre ou lorsque le sélecteur est dans une position d'isolation supplémentaire, pour une intervention sur le réseau, ce qui renforce la sécurité des intervenants en cas de franchissement diélectrique ou de défaillance de l'ampoule sectionneur en amont.
Grâce à l'invention, il est possible d'optimiser le dimensionnement des composants en tension. La fonction sectionnement pour l'exploitation et la fonction mise à la terre sont séparées, ce qui permet d'optimiser le choix des technologies pour chaque fonction (vide et air).
L'ampoule à vide est dimensionnée pour l'exploitation (tension réseau, tension choc). L'isolation supplémentaire dans l'air est dimensionnée pour l'intervention sur le réseau ou le test câble, ce qui ajoute une contrainte supplémentaire (la tension de test des câbles), et la mise à la terre des câbles.

Un autre avantage de ce schéma tient dans la simplicité des manoeuvres pour l'exploitant. La cellule peut être amenée dans trois positions différentes (fermé, sectionné, terre) au moyen de deux appareils, mais un seul appareil est manoeuvré pour le passage d'un état à l'autre, c'est-à-dire d'un état fermé à un état sectionné, d'un état sectionné à une mise à la terre, et d'une mise à la terre à l'état sectionné.

Bien entendu, l'invention n'est pas limitée au mode de réalisation décrit et illustré qui n'a été donné qu'à titre d'exemple.
C'est ainsi que l'invention couvre également la solution d'une cellule dont le sélecteur ne comporte que deux positions respectivement une position de passage du courant et une position de mise à la terre, pour laquelle les résultats précédemment énoncés sont également obtenus. La solution d'un sélecteur à trois positions offre en plus des avantages inhérents à la solution du sélecteur à deux positions, une sécurité accrue lors d'une intervention en aval, et la non obligation de réaliser une déconnection de la terre lors de la réalisation d'un test câbles.
Egalement par exemple, l'appareillage à vide peut être un interrupteur ou un disjoncteur, et le sélecteur peut être à technologie de coupure autre que l'air par exemple le vide ou un autre gaz tel l'azote, le CO2, le SF6, etc.....

## Revendications

1. Cellule de distribution électrique moyenne tension destinée à être interposée entre deux parties d'un circuit électrique de manière à assurer au moins les fonctions respectivement de passage du courant entre les parties, d'interruption du courant entre les parties, de sectionnement du circuit et de mise à la terre de l'une des parties précitées, **caractérisée en ce qu'**elle comporte un interrupteur ou disjoncteur (1) à technologie de coupure dans le vide réalisant également la fonction sectionneur et, en série avec ledit interrupteur (1) ou disjoncteur un sélecteur (2) à au moins deux positions respectivement une position de passage du courant et une position de mise à la terre de l'une des parties du circuit, ledit interrupteur ou disjoncteur (1) étant relié électriquement en amont à un jeu de barres, et en aval, au sélecteur précité (2), lequel est relié électriquement en aval à au moins un câble ou un jeu de barres, ladite cellule pouvant prendre trois positions respectivement une position fermée permettant le passage du courant, puis, après une manoeuvre d'ouverture dudit interrupteur ou disjoncteur, une position déconnectée dans laquelle l'interrupteur ou disjoncteur est en position de sectionnement alors que le sélecteur est en position de passage du courant, cette position permettant une exploitation indépendante des deux parties du réseau, puis après une manoeuvre d'ouverture et de mise à la terre du sélecteur, une position de mise à la terre de l'une des parties précitées, permettant une intervention sur le réseau en aval du sélecteur dans des conditions de sécurité accrues, grâce à l'intervalle d'isolation supplémentaire obtenu par la mise à la terre du sélecteur.

2. Cellule de distribution électrique selon la revendication 1, **caractérisée en ce qu'**elle comporte des moyens pour empêcher le sélecteur de quitter la position fermée si l'interrupteur ou disjoncteur est en position fermée.

3. Cellule de distribution électrique selon la revendication 1 ou 2, **caractérisée en ce qu'**elle comporte des moyens pour empêcher la fermeture de l'interrupteur ou disjoncteur si le sélecteur est à la terre.

4. Cellule de distribution électrique selon l'une quelconque des revendications précédentes, **caractérisée en ce que** le sélecteur précité est un sélecteur (2) à trois positions, respectivement une position de passage du courant, une position ouverte, et une position de mise à la terre de l'une des parties du circuit.

5. Cellule de distribution électrique selon l'une quelconque des revendications précédentes, **caractérisée en ce que** le sélecteur précité (2) est un sélecteur à technologie de coupure dans un gaz.

6. Cellule de distribution électrique selon l'une quelconque des revendications 1 à 4, **caractérisée en ce que** l'interrupteur ou disjoncteur précité (1) et/ou le sélecteur précité (2), est réalisé au moyen d'une ampoule à vide (3).

7. Cellule de distribution électrique selon l'une quelconque des revendications précédentes, **caractérisée en ce que** le sélecteur précité (2) comporte une position, dite position de test câble, permettant le test des câbles (c).

8. Cellule de distribution électrique selon les revendications 4 et 7, **caractérisée en ce que** la position de test câble correspond à la position ouverte précitée du sélecteur (2).

9. Cellule de distribution électrique selon les revendications 7 ou 8, **caractérisée en ce que** le sélecteur précité (2) comporte pour la réalisation du test câble, une traversée ou partie fixe de la prise de test T connectée du côté des câbles, ou bien une traversée ou partie fixe de la prise de test T connectée du côté d'un contact fixe du sélecteur (2) situé du côté du jeu de barres.

## Patentansprüche

1. Mittelspannungs-Verteilerschaltzelle zur Anordnung zwischen zwei Abschnitten eines elektrischen Stromkreises, um mindestens die Funktionen der Stromdurchleitung zwischen den beiden Abschnitten, der Stromunterbrechung zwischen den beiden Abschnitten, der Trennung des Stromkreises sowie der Erdung eines der genannten Stromkreisabschnitte zu gewährleisten, **dadurch gekennzeichnet, dass** die Schaltzelle einen Lastschalter bzw. Leistungsschalter (1) mit Vakuumabschalttechnik und zusätzlicher Trennfunktion sowie einen in Reihe zu dem genannten Lastschalter bzw. Leistungsschalter (1) geschalteten Umschalter (2) mit mindestens zwei Stellungen entsprechend einer Stromdurchleitungsstellung und einer Erdungsstellung zur Erdung eines der Stromkreisabschnitte umfasst, wobei der Lastschalter bzw. Leistungsschalter (1) einspeiseseitig mit einer Sammelschienenanordnung und abgangsseitig mit dem genannten Umschalter (2) elektrisch verbunden ist, welcher Umschalter abgangsseitig mit mindestens einem Kabel oder einer Sammelschienenanordnung elektrisch verbunden ist, wobei die genannte Schaltzelle drei Stellungen einnehmen kann, und zwar eine die Stromdurchleitung erlaubende Einschaltstellung, nach Durchführung eines Ausschaltvorgangs des genannten Lastschalters bzw. Leistungsschalters eine Ausschaltstellung, in der sich der Lastschalter bzw. Leistungsschalter in der Trennstellung befindet und der Umschalter gleichzeitig in der Stromdurchleitungsstellung steht, so dass diese Ausschaltstellung einen unabhängigen Betrieb der beiden Netzabschnitte erlaubt, sowie nach Durchführung eines Ausschalt- und Erdungsvorgangs des Umschalters eine Erdungsstellung mit Erdung des genannten einen Netzabschnitts, welche Erdungsstellung aufgrund der zusätzlichen Trennstrecke durch Erdung des Umschalters die Durchführung von Wartungsarbeiten im abgangsseitigen Netz des Umschalters unter erhöhten Sicherheitsbedingungen erlaubt.

2. Verteilerschaltzelle nach Anspruch 1, **dadurch gekennzeichnet, dass** sie Mittel umfasst, die den Umschalter daran hindern, seine Einschaltstellung zu verlassen, wenn sich der Lastschalter bzw. Leistungsschalter in der Einschaltstellung befindet.

3. Verteilerschaltzelle nach Anspruch 1 oder 2, **dadurch gekennzeichnet, dass** sie Mittel umfasst, die ein Einschalten des Lastschalters bzw. Leistungsschalters verhindern, wenn sich der Umschalter in der Erdungsstellung befindet.

4. Verteilerschaltzelle nach irgendeinem der vorhergehenden Ansprüche **dadurch gekennzeichnet, dass** der genannte Umschalter (2) als Schalter mit drei Stellungen ausgebildet ist, und zwar einer Stromdurchleitungsstellung, einer Ausschaltstellung und einer Erdungsstellung mit Erdung eines der Stromkreisabschnitte.

5. Verteilerschaltzelle nach irgendeinem der vorhergehenden Ansprüche, **dadurch gekennzeichnet, dass** der genannte Umschalter (2) als Schalter mit Stromabschaltung in einem Gasmedium ausgebildet ist.

6. Verteilerschaltzelle nach irgendeinem der Ansprüche 1 bis 4, **dadurch gekennzeichnet, dass** der genannte Lastschalter bzw. Leistungsschalter (1) und/oder der genannte Umschalter (2) mit einer Vakuumschaltröhre (3) ausgebildet sind.

7. Verteilerschaltzelle nach irgendeinem der vorhergehenden Ansprüche, **dadurch gekennzeichnet, dass** der genannte Umschalter (2) eine als Kabelteststellung bezeichnete Stellung umfasst, in der eine Prüfung der Kabel (c) durchgeführt werden kann.

8. Verteilerschaltzelle nach den Ansprüchen 4 und 7, **dadurch gekennzeichnet, dass** die Kabelteststellung der genannten Ausschaltstellung des Umschalters (2) entspricht.

9. Verteilerschaltzelle nach Anspruch 7 oder 8, **dadurch gekennzeichnet, dass** der genannte Umschalter (2) zur Durchführung der Kabelprüfung eine kabelseitig angeschlossene Stromdurchführung bzw. ein feststehendes Teil der Prüfbuchse T oder alternativ eine Stromdurchführung bzw. ein feststehendes Teil der Prüfbuchse T umfasst, die auf der Seite eines sammelschienenseitig angeordneten, feststehenden Kontakts des Umschalters (2) angeschlossen sind.

## Claims

1. Medium voltage electric distribution cell designed for insertion between two parts of an electric circuit so as to ensure at least the functions of current flow between the parts, of current interruption between the parts, of circuit disconnection, and of earthing of one of the aforementioned parts, **characterized in that** said cell comprises a switch or circuit breaker (1) with vacuum break technology also performing the disconnecting function and, in series with said switch (1) or circuit breaker, a selector (2) with at least two positions, respectively a current flow position and an earthing position of one of the parts of the circuit, said switch or circuit breaker (1) being electrically connected upstream to a set of busbars and downstream to the aforementioned selector (2), which is electrically connected downstream to at least one cable or a set of busbars, said cell being able to assume three positions, respectively a closed position allowing the flow of current, then, following an opening manoeuvre of said switch or circuit breaker, a disconnected position in which the switch or circuit breaker is in the disconnection position whereas the selector is in the current flow position, this position enabling independent operation of the two parts of the network, then, after an opening manoeuvre and earthing of the selector, an earthed position of one of the aforementioned parts, enabling an intervention on the network downstream of the selector under conditions of enhanced safety, thanks to the additional insulation gap obtained by the earthing of the selector.

2. Electric distribution cell according to Claim 1, **characterized in that** said cell comprises means for preventing the selector from leaving the closed position if the switch or circuit breaker is in the closed position.

3. Electric distribution cell according to Claim 1 or 2, **characterized in that** said cell comprises means for preventing closing of the switch or circuit breaker if the selector is earthed.

4. Electric distribution cell according to any one of the preceding claims, **characterized in that** the aforementioned selector is a three-position selector (2), said positions being respectively a current flow position, an open position, and an earthed position of one of the parts of the circuit.

5. Electric distribution cell according to any one of the preceding claims, **characterized in that** the aforementioned selector (2) is a selector using gas-break technology.

6. Electric distribution cell according to any one of Claims 1 to 4, **characterized in that** the aforementioned switch or circuit breaker (1) and/or the aforementioned selector (2) is/are formed by means of a vacuum cartridge (3).

7. Electric distribution cell according to any one of the preceding claims, **characterized in that** the aforementioned selector (2) comprises a position, called the cable test position, enabling the cables to be tested (c).

8. Electric distribution cell according to Claims 4 and 7, **characterized in that** the cable test position corresponds to the aforementioned open position of the selector (2).

9. Electric distribution cell according to Claims 7 or 8, **characterized in that**, for performing cable testing, the aforementioned selector (2) comprises a bushing or fixed part of the test connector T connected on the cable side, or a bushing or fixed part of the test connector T connected on the same side as a fixed contact of the selector (2) situated on the busbar side.
